(19)

Europäisches
Patentamt
European
Patent Office
Office européen
des brevets

(11) **EP 4 455 217 A1**

(12) **EUROPEAN PATENT APPLICATION**
published in accordance with Art. 153(4) EPC

(43) Date of publication:
**30.10.2024  Bulletin 2024/44**

(21) Application number: **22911161.2**

(22) Date of filing: **19.12.2022**

(51) International Patent Classification (IPC):
***C08L 77/06*** (2006.01)      ***C08G 69/02*** (2006.01)
***C08L 25/18*** (2006.01)

(52) Cooperative Patent Classification (CPC):
**C08G 69/02; C08L 25/18; C08L 77/06**

(86) International application number:
**PCT/JP2022/046619**

(87) International publication number:
**WO 2023/120459 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **20.12.2021   JP 2021206193**

(71) Applicant: **Kuraray Co., Ltd.**
**Kurashiki-shi, Okayama 710-0801 (JP)**

(72) Inventors:
• **SUGAI, Naoto**
**Tsukuba-shi, Ibaraki 305-0841 (JP)**
• **NANYA, Atsushi**
**Tsukuba-shi, Ibaraki 305-0841 (JP)**

(74) Representative: **Müller-Boré & Partner**
**Patentanwälte PartG mbB**
**Friedenheimer Brücke 21**
**80639 München (DE)**

(54)    **POLYAMIDE COMPOSITION**

(57)    A polyamide composition, which comprises a polyamide (A) and comprises a halogenated flame retardant (B), and in which the polyamide (A) comprises a diamine unit (X) and a dicarboxylic acid unit (Y), the diamine unit (X) comprises 0.1 mol% or more and less than 36 mol% of a diamine unit (X1), and the diamine unit (X1) is a constituent unit derived from an aliphatic diamine, and the aliphatic diamine has 6 to 10 carbon atoms, the aliphatic diamine having an alkyl group having two or three carbon atoms bonded to a carbon atom at 2-position when a carbon atom to which any one of two amino groups is bonded is taken as 1-position.

EP 4 455 217 A1

**Description**

Technical Field

The present invention relates to a polyamide composition, which contains a polyamide containing a specific diamine unit having a branched chain and a dicarboxylic acid unit, and contains a halogenated flame retardant.

Background Art

Crystalline polyamides represented by nylon 6, nylon 66, and the like are widely used for industrial parts because of their excellent heat resistance, mechanical properties, moldability, and the like. For example, in automotive applications, resinification of metal parts has been promoted from the viewpoint of weight reduction and design flexibility, and crystalline polyamides excellent in the above properties are often used. However, the performance required for plastic materials from the viewpoint of improving fuel efficiency and complying with environmental regulations has become severe, and materials with more excellent performance from the viewpoint of heat resistance, hydrolysis resistance, and the like are required.

In addition, from the viewpoint of reducing the production cost of parts, there is a demand for a material in which a time required for the material to be cooled and solidified from a molten state, that is, a crystallization rate is high. When the crystallization rate is high, the time required for molding one part can be shortened, and the production efficiency can be improved.

For example, PTL 1 discloses that a polyamide simultaneously satisfying fluidity, toughness, stiffness, and the like can be obtained by incorporation of at least 50 mol% of a diamine unit having a branched structure in the main chain of the polyamide. Whereas PTL 2 discloses a method for producing a polyamide composition containing a diamine unit having a methyl or ethyl branch.

Citation List

Patent Literature

PTL 1: JP2011-080055A

PTL2: JP2017-517594A

Summary of Invention

Technical Problem

In PTLs 1 and 2, a methyl group, an ethyl group, an n-propyl group, and the like are described as substituents branched from a main chain of a diamine forming a polyamide. However, only a diamine having a methyl group as a branched chain is specifically exemplified. In any of the documents, there is no specific disclosure including a branched diamine containing a substituent having a longer number of carbon atoms than that of a methyl group as a branched chain, and the effect of containing a branched chain having 2 or more carbon atoms is not clear.

As described above, a material having a high crystallization rate is required, and also physical properties such as heat resistance are also required to be improved.

Therefore, the present invention provides a polyamide composition excellent in heat resistance, flame retardancy, and moldability, and also excellent in hydrolysis resistance.

Solution to Problem

As a result of intensive studies to solve the above problems, the present inventors have conceived the following present invention and found that the problems can be solved.

That is, the present invention is as follows.

[1] A polyamide composition, which contains a polyamide (A) and a halogenated flame retardant (B), and in which

the polyamide (A) comprises a diamine unit (X) and a dicarboxylic acid unit (Y),

the diamine unit (X) comprises 0.1 mol% or more and less than 36 mol% of a diamine unit (X1),

the diamine unit (X1) is a constituent unit derived from an aliphatic diamine, and the aliphatic diamine has 6 to 10 carbon atoms, the aliphatic diamine having an alkyl group having two or three carbon atoms bonded to a carbon atom at 2-position when a carbon atom to which any one of two amino groups is bonded is taken as 1-position.

[2] The polyamide composition according to the above [1], in which the diamine unit (X1) is a constituent unit derived from an aliphatic diamine having 9 carbon atoms.

[3] The polyamide composition according to the above [1] or [2], in which the diamine unit (X1) is a constituent unit derived from at least one diamine selected from the group consisting of 2-ethyl-1,7-heptanediamine and 2-propyl-1,6-hexanediamine.

[4] The polyamide composition according to any of the above [1] to [3], in which the diamine unit (X) comprises 1 to 20 mol% of the diamine unit (X1).

[5] The polyamide composition according to any of the above [1] to [4], in which the diamine unit (X) further comprises a diamine unit (X2) which is a diamine unit other than the diamine unit (X1), and the diamine unit (X2) is a constituent unit derived from at least one diamine selected from the group consisting of a linear aliphatic diamine, a branched aliphatic diamine other than the aliphatic diamine constituting the diamine unit (X1), an alicyclic diamine, and an aromatic diamine.

[6] The polyamide composition according to the above [5], in which the diamine unit (X2) is a constituent unit derived from at least one diamine selected from the group consisting of a linear aliphatic diamine and a branched aliphatic diamine having a methyl group as a branched chain.

[7] The polyamide composition according to the above [5] or [6], in which the diamine unit (X2) is a constituent unit derived from a diamine having 6 to 10 carbon atoms.

[8] The polyamide composition according to any of the above [5] to [7], in which the diamine unit (X2) is a constituent unit derived from at least one diamine selected from the group consisting of 1,6-hexanediamine, 1,9-nonanediamine, 1,10-decanediamine, 2-methyl-1,5-pentanediamine, and 2-methyl-1,8-octanediamine.

[9] The polyamide composition according to any of the above [1] to [8], in which the dicarboxylic acid unit (Y) comprises a constituent unit derived from at least one dicarboxylic acid selected from the group consisting of an aliphatic dicarboxylic acid, an aromatic dicarboxylic acid, and an alicyclic dicarboxylic acid.

[10] The polyamide composition according to any of the above [1] to [9], in which the dicarboxylic acid unit (Y) comprises a constituent unit derived from at least one dicarboxylic acid selected from the group consisting of terephthalic acid, cyclohexanedicarboxylic acid, and naphthalenedicarboxylic acid.

[11] The polyamide composition according to any of the above [1] to [10], in which the halogenated flame retardant (B) is a brominated flame retardant (B1).

[12] The polyamide composition according to the above [11], in which the brominated flame retardant (B1) is a brominated polystyrene.

[13] The polyamide composition according to any of the above [1] to [12], further comprising a filler (C).

[14] The polyamide composition according to the above [13], in which the filler (C) is contained in an amount of 0.1 parts by mass or more and 200 parts by mass or less with respect to 100 parts by mass of the polyamide (A).

[15] The polyamide composition according to any of the above [1] to [14], further containing a flame retardant aid (D).

[16] The polyamide composition according to the above [15], in which the flame retardant aid (D) is contained in an amount of 1 part by mass or more and 30 parts by mass or less with respect to 100 parts by mass of the polyamide (A).

[17] The polyamide composition according to the above [15] or [16], in which the flame retardant aid (D) is at least one selected from the group consisting of diantimony trioxide, diantimony tetroxide, diantimony pentoxide, sodium antimonate, melamine orthophosphate, melamine pyrophosphate, melamine borate, melamine polyphosphate, aluminum oxide, aluminum hydroxide, zinc borate, and zinc tin trioxide.

[18] A molded article composed of the polyamide composition according to any of the above [1] to [17].

[19] The molded article according to the above [18], which is an electric part or an electronic part.

[20] The molded article according to the above [18] or [19], which is a surface-mounted part.

Advantageous Effects of Invention

According to the present invention, a polyamide composition excellent in heat resistance, flame retardancy, and moldability, and also excellent in hydrolysis resistance can be provided.

Description of Embodiments

Hereinafter, an example of an embodiment of the present invention (hereinafter may be referred to as "the present embodiment") will be described. However, the embodiments described below are examples for embodying the technical idea of the present invention, and the present invention is not limited to the following description.

In addition, in the description herein, preferred embodiments are shown, but a combination of two or more of individual preferred embodiments is also a preferred embodiment. Regarding the matters indicated by the numerical ranges, in a case where there are several numerical ranges, it is possible to selectively combine the lower limit value and the upper limit value thereof to obtain a preferred embodiment.

In the description herein, when there is a description of a numerical range of "XX to YY", it means "XX or more and YY or less".

Further, in the description herein, the phrase "- unit" (wherein "-" represents a monomer) means "a constituent unit derived from -", for example, a "dicarboxylic acid unit" means "a constituent unit derived from a dicarboxylic acid", and a "diamine unit" means "a constituent unit derived from a diamine".

<Polyamide Composition>

[Polyamide (A)]

A polyamide (A) used in the present embodiment contains a diamine unit (X) and a dicarboxylic acid unit (Y).

The diamine unit (X) is characterized by containing a specific amount of a diamine unit (X1) derived from an aliphatic diamine and the aliphatic diamine has 6 to 10 carbon atoms, the aliphatic diamine having an alkyl group having two or three carbon atoms bonded to a carbon atom at 2-position when a carbon atom to which any one of two amino groups is bonded is taken as 1-position.

In general, when a component having a large excluded volume such as a branched chain is contained in a polymer skeleton, molecular chains are less likely to be regularly arranged, and thus the crystallization rate tends to be low. However, in the present embodiment, by incorporation of a specific amount of a diamine component that has an alkyl group having 2 or 3 carbon atoms, such as an ethyl group or a propyl group, as a branched chain, the crystallization rate was unexpectedly increased.

In addition, in general, when a polyamide has a bulky substituent such as a branched chain, the polyamide is less likely to have a crystal structure, and the melting point tends to decrease. However, in the present embodiment, even if the polyamide (A) has a relatively bulky substituent having 2 or 3 carbon atoms, such as an ethyl group or a propyl group, as a branched chain, the decrease in the melting point is small, and excellent heat resistance can be exhibited.

Further, a glass transition temperature is a property such that the lower the molecular mobility of the amorphous portion is, the higher the glass transition temperature is. Therefore, when a component having high molecular mobility such as a branched chain is contained, the glass transition temperature generally tends to become lower. However, in the present embodiment, unexpectedly, the polyamide (A) has little decrease in the glass transition temperature, and can exhibit excellent heat resistance.

One of the reasons why the above-mentioned effects are obtained is considered that the number of carbon atoms in the branched chain, the position of the branched chain, and the amount of the branched chain included in the diamine unit (X) contained in the polyamide (A) may affect the improvement of the crystallization rate while maintaining excellent heat resistance. However, the detailed reason is not clear.

(Diamine Unit (X))

<Diamine Unit (X1)>

The diamine unit (X) contains a diamine unit (X1) which is a constituent unit derived from an aliphatic diamine that has 6 to 10 carbon atoms and has an alkyl group having 2 or 3 carbon atoms bonded to a carbon atom at 2-position when a carbon atom to which any one of amino groups is bonded is taken as 1-position.

When assuming a linear aliphatic chain having carbon atoms, to which two amino groups are bonded, respectively, at both ends, the diamine unit (X1) is a constituent unit derived from an aliphatic diamine having a structure in which one of the hydrogen atoms on a carbon atom at 2-position adjacent to a carbon atom at 1-position to which any one of the amino groups is bonded is substituted with an alkyl group having 2 or 3 carbon atoms. Hereinafter, a constituent unit derived from an aliphatic diamine having a structure in which one of the hydrogen atoms on a carbon atom at 2-position is substituted with an alkyl group having 2 or 3 carbon atoms is also referred to as "branched aliphatic diamine unit".

The number of carbon atoms of the branched aliphatic diamine unit constituting the diamine unit (X1) is preferably 8 to 10, and more preferably 9. When the number of carbon atoms is within the above-mentioned range, the polymerization reaction between a dicarboxylic acid and a diamine proceeds well, and the physical properties of the polyamide composition are more easily improved.

In the branched aliphatic diamine unit constituting the diamine unit (X1), the alkyl group having 2 or 3 carbon atoms is preferably at least one selected from the group consisting of an ethyl group, a propyl group, and an isopropyl group, and more preferably at least one selected from the group consisting of an ethyl group and a propyl group. When the number of carbon atoms of the alkyl group is 1 or is 4 or more, there is a possibility that the crystallization rate is not improved and the heat resistance decreases.

The branched aliphatic diamine used for forming the diamine unit (X1) may have a branched chain such as a methyl group (referred to as an "additional branched chain") at a carbon atom other than the carbon atom at 2-position as long as the effects of the present invention are not impaired. The number of additional branched chains is preferably one or less, and it is more preferable that the diamine unit (X1) does not contain additional branched chains.

Examples of the diamine unit (X1) include constituent units derived from 2-ethyl-1,4-butanediamine, 2-ethyl-1,5-pentanediamine, 2-ethyl-1,6-hexanediamine, 2-ethyl-1,7-heptanediamine, 2-ethyl-1,8-octanediamine, 2-propyl-1,5-pentanediamine, 2-propyl-1,6-hexanediamine, 2-propyl-1,7-heptanediamine, and 2,4-diethyl-1,6-hexanediamine. Only one kind of these constituent units may be contained or two or more kinds thereof may be contained.

In particular, from the viewpoint that a more excellent improvement in crystallization rate can be expected, and also a molded article to be obtained is made excellent in hydrolysis resistance, it is preferable that the diamine unit (X1) is a constituent unit derived from at least one diamine selected from the group consisting of 2-ethyl-1,7-heptanediamine and 2-propyl-1,6-hexanediamine.

The diamine unit (X) contains the diamine unit (X1) in an amount of 0.1 mol% or more and less than 36 mol%. By setting the amount to 0.1 mol% or more, it is possible to improve the crystallization rate. By setting the amount to less than 36 mol%, it is possible to reduce a possibility that the heat resistance decreases.

From the viewpoint of obtaining a polyamide composition having a more excellent balance between heat resistance and crystallization rate, the diamine unit (X) contains the diamine unit (X1) in an amount of preferably 0.5 mol% or more, more preferably 1 mol% or more, still more preferably 3 mol% or more, and even more preferably 5 mol% or more, and is preferably 35 mol% or less, more preferably 30 mol% or less, still more preferably 25 mol% or less, even more preferably 20 mol% or less, even more preferably 18 mol% or less, even more preferably 15 mol% or less, and even more preferably 10 mol% or less.

In other words, the diamine unit (X) contains the diamine unit (X1) in an amount of preferably 0.5 to 35 mol%, more preferably 0.5 to 30 mol%, still more preferably 1 to 30 mol%, even more preferably 3 to 25 mol%, and even more preferably 5 to 20 mol%.

In addition, as one preferred embodiment, when the diamine unit (X1) is a constituent unit derived from at least one diamine selected from the group consisting of 2-ethyl-1,7-heptanediamine and 2-propyl-1,6-hexanediamine, an example of the content of each constituent unit is as follows.

The content of the constituent unit derived from 2-ethyl-1,7-heptanediamine in the diamine unit (X) is preferably 0.5 mol% or more, and more preferably 2 mol% or more, and is preferably 20 mol% or less, more preferably 16 mol% or less, and still more preferably 10 mol% or less. In other words, the content of the constituent unit derived from 2-ethyl-1,7-heptanediamine in the diamine unit (X) is preferably 0.5 to 20 mol%.

The content of the constituent unit derived from 2-propyl-1,6-hexanediamine in the diamine unit (X) is preferably 0.1 mol% or more, and more preferably 0.5 mol% or more, and is preferably 5 mol% or less, more preferably 3 mol% or less, and still more preferably 2 mol% or less. In other words, the content of the constituent unit derived from 2-propyl-1,6-hexanediamine in the diamine unit (X) is preferably 0.1 to 5 mol%.

<Diamine Unit (X2)>

The polyamide (A) contains, as the diamine unit (X), a diamine unit other than the diamine unit (X1) (hereinafter, also referred to as a "diamine unit (X2)").

The diamine unit (X2) is a constituent unit derived from a diamine having preferably 6 to 10 carbon atoms, more preferably 8 to 10 carbon atoms, and still more preferably 9 carbon atoms from the viewpoint that the polymerization reaction between a dicarboxylic acid and a diamine proceeds well.

Examples of the diamine unit (X2) include a constituent unit derived from at least one diamine selected from the group consisting of a linear aliphatic diamine, a branched aliphatic diamine other than the aliphatic diamine constituting the diamine unit (X1), an alicyclic diamine, and an aromatic diamine.

Examples of the linear aliphatic diamine include ethylenediamine, 1,3-propanediamine, 1,4-butanediamine, 1,5-pentanediamine, 1,6-hexanediamine, 1,7-heptanediamine, 1,8-octanediamine, 1,9-nonandiamine, 1,10-decanediamine, 1,11-undecanediamine, 1,12-dodecanediamine, 1,13-tridecanediamine, 1,14-tetradecandiamine, 1,15-pentadecanediamine, 1,16-hexadecandiamine, 1,17-heptadecanediamine, and 1,18-octadecandiamine.

Examples of the branched aliphatic diamine include 1, 2-propanediamine, 1-butyl-1,2-ethanediamine, 1,1-dimethyl-1,4-butanediamine, 1-ethyl-1,4-butanediamine, 1,2-dimethyl-1,4-butanediamine, 1,3-dimethyl-1,4-butanediamine, 1,4-dimethyl-1,4-butanediamine, 2-methyl-1,3-propanediamine, 2-methyl-1,4-butanediamine, 2,3-dimethyl-1,4-butanediamine, 2-methyl-1,5-pentanediamine, 3-methyl-1,5-pentanediamine, 2-butyl-2-ethyl-1,5-pentanediamine, 2,5-dimethyl-1,6-hexanediamine, 2,4-dimethyl-1,6-hexanediamine, 3,3-dimethyl-1,6-hexanediamine, 2,2-dimethyl-1,6-hexanediamine, 2,2,4-trimethyl-1,6-hexanediamine, 2,4,4-trimethyl-1,6-hexanediamine, 2-methyl-1,8-octanediamine, 3-methyl-1,8-octanediamine, 1,3-dimethyl-1,8-octanediamine, 1,4-dimethyl-1,8-octanediamine, 2,4-dimethyl-1,8-octanediamine, 3,4-dimethyl-1,8-octanediamine, 4,5-dimethyl-1,8-octanediamine, 2,2-dimethyl-1,8-octanediamine, 3,3-dimethyl-1,8-octanediamine, 4,4-dimethyl-1,8-octanediamine, 2-methyl-1,9-nonanediamine, and 5-methyl-1,9-nonanediamine.

Examples of the alicyclic diamine include cyclohexanediamine, methylcyclohexanediamine, norbornanedimethylamine, tricyclodecanedimethyldiamine, bis(4-amino-3-ethylcyclohexyl)methane, and bis(4-amino-3-ethyl-5-methylcyclohexyl)methane.

Examples of the aromatic diamine include p-phenylenediamine, m-phenylenediamine, p-xylylenediamine, m-xylylenediamine, 4,4'-diaminodiphenylmethane, 4,4'-diaminodiphenyl sulfone, 4,4'-diaminodiphenyl ether, and 4,4'-methylenebis(2,6-diethylaniline).

The constituent unit derived from the diamine may be only one kind or two or more kinds.

Among the above-mentioned diamine units (X2), a constituent unit derived from at least one diamine selected from the group consisting of a linear aliphatic diamine, and a branched aliphatic diamine in which a branched chain is a methyl group is more preferable. From the viewpoint of easily exhibiting the effects of the present invention more remarkably, the diamine unit (X2) is more preferably a constituent unit derived from at least one diamine selected from the group consisting of 1,6-hexanediamine, 1,9-nonanediamine, 1,10-decanediamine, 2-methyl-1,5-pentanediamine, and 2-methyl-1,8-octanediamine.

(Dicarboxylic Acid Unit (Y))

As the dicarboxylic acid unit (Y), an arbitrary dicarboxylic acid unit can be contained.

The dicarboxylic acid unit (Y) can contain, for example, a constituent unit derived from at least one dicarboxylic acid selected from the group consisting of an aliphatic dicarboxylic acid, an aromatic dicarboxylic acid, and an alicyclic dicarboxylic acid.

Examples of the aliphatic dicarboxylic acid include oxalic acid, malonic acid, succinic acid, glutaric acid, adipic acid, pimelic acid, suberic acid, azelaic acid, sebacic acid, undecanedicarboxylic acid, dodecanedicarboxylic acid, dimethylmalonic acid, 2,2-diethylsuccinic acid, 2,2-dimethylglutaric acid, 2-methyladipic acid, and trimethyladipic acid.

Examples of the aromatic dicarboxylic acid include terephthalic acid, isophthalic acid, diphenic acid, 4,4'-biphenyldicarboxylic acid, diphenylmethane-4,4'-dicarboxylic acid, diphenylsulphone-4,4'-dicarboxylic acid, 1,2-naphthalenedicarboxylic acid, 1,3-naphthalenedicarboxylic acid, 1,4-naphthalenedicarboxylic acid, 1,5-naphthalenedicarboxylic acid, 1,6-naphthalenedicarboxylic acid, 1,7-naphthalenedicarboxylic acid, 1,8-naphthalenedicarboxylic acid, 2,3-naphthalenedicarboxylic acid, 2,6-naphthalenedicarboxylic acid, 2,7-naphthalenedicarboxylic acid, 2,3-furandicarboxylic acid, 2,4-furandicarboxylic acid, 2,5-furandicarboxylic acid, and 3,4-furandicarboxylic acid.

Examples of the alicyclic dicarboxylic acid include 1,3-cyclopentanedicarboxylic acid, 1,3-cyclohexanedicarboxylic acid, 1,4-cyclohexanedicarboxylic acid, cycloheptanedicarboxylic acid, cyclooctanedicarboxylic acid, and cyclodecanedicarboxylic acid.

As the constituent unit derived from the dicarboxylic acid, only one kind may be contained or two or more kinds may be contained.

From the viewpoint of easily exhibiting the effects of the present invention more remarkably, the dicarboxylic acid unit (Y) preferably contains a constituent unit derived from at least one dicarboxylic acid selected from the group consisting of an aromatic dicarboxylic acid and an alicyclic dicarboxylic acid, and more preferably contains a constituent unit derived from at least one dicarboxylic acid selected from the group consisting of terephthalic acid, cyclohexanedicarboxylic acid, and naphthalenedicarboxylic acid.

From the viewpoint of making it easier to exhibit the effects of the present invention more remarkably, the total content of constituent units derived from an aliphatic dicarboxylic acid, an aromatic dicarboxylic acid, and an alicyclic dicarboxylic acid in the dicarboxylic acid unit (Y) is preferably 80 mol% or more, more preferably 90 mol%, still more preferably 95 mol% or more, and may be 100 mol%. In other words, the total content of constituent units derived from an aliphatic dicarboxylic acid, an aromatic dicarboxylic acid, and an alicyclic dicarboxylic acid in the dicarboxylic acid unit (Y) is preferably 80 to 100 mol%.

In addition, from the same viewpoint, the total content of constituent units derived from terephthalic acid, cyclohexanedicarboxylic acid, and naphthalenedicarboxylic acid in the dicarboxylic acid unit (Y) is preferably 80 mol% or more, more preferably 90 mol%, still more preferably 95 mol% or more, and may be 100 mol%. In other words, the total content of constituent units derived from terephthalic acid, cyclohexanedicarboxylic acid, and naphthalenedicarboxylic acid in the dicarboxylic acid unit (Y) is preferably 80 to 100 mol%.

The molar ratio of the diamine unit (X) to the dicarboxylic acid unit (Y) [(diamine unit (X))/(dicarboxylic acid unit (Y))] in the polyamide (A) is preferably 45/55 to 55/45. When the molar ratio of the diamine unit (X) to the dicarboxylic acid unit (Y) is within the above-mentioned range, the polymerization reaction proceeds well, and a polyamide composition excellent in desired physical properties is easily obtained.

The molar ratio of the diamine unit (X) to the dicarboxylic acid unit (Y) can be adjusted in accordance with the blending ratio (molar ratio) of the raw material diamine to the raw material dicarboxylic acid.

The total proportion of the diamine unit (X) and the dicarboxylic acid unit (Y) in the polyamide (A) (the proportion of the total number of moles of the dicarboxylic acid unit (Y) and the diamine unit (X) to the number of moles of all the constituent units constituting the polyamide) is preferably 70 mol% or more, more preferably 80 mol% or more, still more preferably 90 mol% or more, even more preferably 95 mol% or more, and further may be 100 mol%. When the total proportion of the diamine unit (X) and the dicarboxylic acid unit (Y) is within the above-mentioned range, a polyamide (A) more excellent in desired physical properties can be obtained. In other words, the total proportion of the diamine unit (X) and the dicarboxylic acid unit (Y) in the polyamide (A) is preferably 70 to 100 mol%.

(Aminocarboxylic Acid Unit)

The polyamide (A) may further contain an aminocarboxylic acid unit in addition to the diamine unit (X) and the dicarboxylic acid unit (Y).

Examples of the aminocarboxylic acid unit include constituent units derived from lactams such as caprolactam and lauryllactam; and aminocarboxylic acids such as 11-aminoundecanoic acid and 12-aminododecanoic acid. The content of the aminocarboxylic acid unit in the polyamide (A) is preferably 40 mol% or less, and more preferably 20 mol% or less with respect to 100 mol% of the total of the diamine unit (X) and the dicarboxylic acid unit (Y) constituting the polyamide (A). In other words, the content of the aminocarboxylic acid unit in the polyamide (A) is preferably 0 to 40 mol% with respect to 100 mol% of the total of the diamine unit (X) and the dicarboxylic acid unit (Y) constituting the polyamide (A).

(Polyvalent Carboxylic Acid Unit)

The polyamide (A) may also contain a constituent unit derived from a polyvalent carboxylic acid having a valence of 3 or higher, such as trimellitic acid, trimesic acid, or pyromellitic acid, within a range in which melt molding is possible, as long as the effects of the present invention are not impaired.

(Terminal Blocking Agent Unit)

The polyamide (A) may contain a constituent unit derived from a terminal blocking agent (terminal blocking agent unit).

The amount of the terminal blocking agent unit is preferably 1.0 mol% or more, and more preferably 2.0 mol% or more, and is preferably 10 mol% or less, and more preferably 5.0 mol% or less with respect to 100 mol% of the diamine unit (X). In other words, the amount of the terminal blocking agent unit is preferably 1.0 to 10 mol% with respect to 100 mol% of the diamine unit (X).

When the content of the terminal blocking agent unit is within the above-mentioned range, a polyamide (A) excellent in desired physical properties is easily obtained. The content of the terminal blocking agent unit can be made to fall within the above-mentioned desired range by appropriately adjusting the amount of the terminal blocking agent at the time of charging the polymerization raw materials. In consideration of volatilization of the monomer component during polymerization, it is desirable to finely adjust the amount of the terminal blocking agent to be charged so that a desired amount of the terminal blocking agent unit is introduced into the obtained polyamide (A).

Examples of the method for obtaining the content of the terminal blocking agent unit in the polyamide (A) include, as described in JPH07-228690A, a method in which an inherent viscosity is measured, the total amount of terminal groups is calculated from the relational formula between the inherent viscosity and the number-average molecular weight, and the amount of amino groups and the amount of carboxy groups obtained by titration are subtracted therefrom, and a method in which $^1$H-NMR is used to obtain the content based on the integrated values of signals corresponding to each of the diamine unit (X) and the terminal blocking agent unit, and the latter is preferable.

As the terminal blocking agent, a monofunctional compound having reactivity with a terminal amino group or a terminal carboxy group can be used. Specific examples thereof include a monocarboxylic acid, an acid anhydride, a monoisocyanate, a monoacid halide, a monoester, a monoalcohol, and a monoamine. From the viewpoint of reactivity, stability of the blocked terminal, and the like, a monocarboxylic acid is preferable as the terminal blocking agent for the terminal amino group, and a monoamine is preferable as the terminal blocking agent for the terminal carboxy group. From the viewpoint of ease of handling and the like, a monocarboxylic acid is more preferable as the terminal blocking agent.

The monocarboxylic acid used as the terminal blocking agent is not particularly limited as long as it has reactivity with an amino group, and examples thereof include aliphatic monocarboxylic acids such as acetic acid, propionic acid, butyric acid, valeric acid, caproic acid, caprylic acid, lauric acid, tridecanoic acid, myristic acid, palmitic acid, stearic acid, pivalic acid, and isobutyric acid; alicyclic monocarboxylic acids such as cyclopentanecarboxylic acid and cyclohexanecarboxylic acid; aromatic monocarboxylic acids such as benzoic acid, toluic acid, α-naphthalenecarboxylic acid, β-naphthalenecarboxylic acid, methylnaphthalenecarboxylic acid, and phenylacetic acid; and arbitrary mixtures thereof. Among these, at least one selected from the group consisting of acetic acid, propionic acid, butyric acid, valeric acid, caproic acid, caprylic acid, lauric acid, tridecanoic acid, myristic acid, palmitic acid, stearic acid, and benzoic acid is preferable from the viewpoint of reactivity, stability of the blocked terminal, price, and the like.

The monoamine used as the terminal blocking agent is not particularly limited as long as it has reactivity with a carboxy group, and examples thereof include aliphatic monoamines such as methylamine, ethylamine, propylamine, butylamine, hexylamine, octylamine, decylamine, stearylamine, dimethylamine, diethylamine, dipropylamine, and dibutylamine; alicyclic monoamines such as cyclohexylamine and dicyclohexylamine; aromatic monoamines such as aniline, toluidine, diphenylamine, and naphthylamine; and arbitrary mixtures thereof. Among these, at least one selected from the group consisting of butylamine, hexylamine, octylamine, decylamine, stearylamine, cyclohexylamine, and aniline is preferable from the viewpoint of reactivity, a high boiling point, stability of the blocked terminal, price, and the like.

From the viewpoint of making it easier to ensure good moldability, heat resistance, mechanical strength, and chemical resistance, the content of the polyamide (A) contained in the total amount of the polyamide composition of present embodiment is preferably 20 to 60% by mass, more preferably 25 to 55% by mass, and still more preferably 30 to 50% by mass.

(Physical Properties of Polyamide (A))

The polyamide (A) preferably has an inherent viscosity of 0.5 dL/g or more, and more preferably 0.7 dL/g or more, and is preferably 2.0 dL/g or less, and more preferably 1.5 dL/g or less. In other words, the inherent viscosity of the polyamide (A) is preferably 0.5 to 2.0 dL/g. When the inherent viscosity is within the above-mentioned range, it is possible to obtain a polyamide (A) more excellent in desired physical properties.

The inherent viscosity of the polyamide (A) can be obtained by measuring the flow-down time of a solution thereof using concentrated sulfuric acid as the solvent having a concentration of 0.2 g/dL and a temperature of 30°C, and more specifically, can be obtained by the method described in the Examples.

The polyamide (A) preferably has a melting point of 250°C or higher, and more preferably 280°C or higher. When the melting point is within the above-mentioned range, a polyamide composition having excellent heat resistance can be obtained. The upper limit of the melting point of the polyamide (A) is not particularly limited, but is preferably 330°C or lower also in consideration of moldability and the like. In other words, the melting point of the polyamide (A) is preferably 250 to 330°C.

The melting point of the polyamide (A) can be obtained as a peak temperature of an endothermic peak that appears when the temperature is raised at a rate of 10°C/min using a differential scanning calorimetry (DSC) analyzer, and more specifically, can be obtained by the method described in the Examples.

The polyamide (A) preferably has a glass transition temperature of 110°C or higher, and more preferably 120°C or higher. When the glass transition temperature is within the above-mentioned range, a polyamide composition having excellent heat resistance can be obtained. The upper limit of the glass transition temperature of the polyamide (A) is not particularly limited, but is preferably 180°C or lower, more preferably 160°C or lower, and may be 150°C or lower from the viewpoint of handling and the like. In other words, the glass transition temperature of the polyamide (A) is preferably 110 to 180°C.

The glass transition temperature of the polyamide (A) can be obtained as a temperature at the inflection point that appears when the temperature is raised at a rate of 20°C/min using a differential scanning calorimetry (DSC) analyzer, and more specifically, can be obtained by the method described in the Examples.

The polyamide (A) preferably has a crystallization rate of $0.02°C^{-1}$ or more, and more preferably $0.04°C^{-1}$ or more. When the crystallization rate is within the above-mentioned range, a polyamide composition excellent in productivity can be obtained.

The crystallization rate can be obtained by the following formula (Formula 1).

$$\text{Crystallization rate } (°C^{-1}) = 1/(\text{melting point } (°C) - \text{crystallization temperature } (°C))$$

(Formula 1)

The amount of terminal amino groups ([NH$_2$]) in the molecular chain of the polyamide (A) is preferably 5 μmol/g or more, and more preferably 10 μmol/g or more, and is preferably 160 μmol/g or less, more preferably 100 μmol/g or less, and still more preferably 80 μmol/g or less. In other words, the amount of terminal amino groups is preferably 5 to 160 μmol/g.

When the amount of terminal amino groups is 5 μmol/g or more, an even higher crystallization rate can be exhibited, and good hydrolysis resistance can be exhibited. Further, when the polyamide composition of the present embodiment contains a fibrous filler (C1) as the filler (C), the adhesion to the fibrous filler (C1) becomes good, and the mechanical properties can be improved. When the amount of terminal amino groups is 160 μmol/g or less, even more excellent heat resistance is exhibited, and the polyamide composition has good melt viscosity during processing.

In the present invention, the amount of terminal amino groups refers to the amount (unit: μmol) of terminal amino groups contained in 1 g of the polyamide.

The amount of terminal amino groups of the polyamide (A) can be obtained by titrating a phenol solution in which the polyamide (A) is dissolved using an aqueous hydrochloric acid solution, and more specifically, can be obtained by the method described in the Examples.

The amount of terminal carboxy groups ([COOH]) in the molecular chain of the polyamide (A) is preferably 2 μmol/g or more, more preferably 5 μmol/g or more, and still more preferably 10 μmol/g or more, and is preferably 100 μmol/g or less, and more preferably 80 μmol/g or less. In other words, the amount of terminal carboxy groups is preferably 2 to 100 μmol/g.

When the amount of terminal carboxy groups is 2 μmol/g or more, an even higher crystallization rate is exhibited, and excellent heat resistance is more easily exhibited. Further, when the polyamide composition of the present embodiment contains a fibrous filler (C1) as the filler (C), the adhesion to the fibrous filler (C1) becomes good, and the mechanical properties can be improved. When the amount of terminal carboxy groups is 100 μmol/g or less, good hydrolysis resistance can be exhibited. Further, hydrolysis in an acidic environment is prevented and the chemical resistance is improved.

In the present invention, the amount of terminal carboxy groups refers to the amount (unit: μmol) of terminal carboxy groups contained in 1 g of the polyamide.

The amount of terminal carboxy groups of the polyamide (A) can be obtained by titrating a cresol solution in which the polyamide (A) is dissolved using a potassium hydroxide solution, and more specifically, can be obtained by the method described in the Examples.

The ratio ([NH$_2$]/[COOH]) of the amount of terminal amino groups ([NH$_2$]) to the amount of terminal carboxy groups ([COOH]) in the molecular chain of the polyamide (A) is preferably 0.1 or more, and more preferably 0.3 or more, and is preferably 50 or less, more preferably 10 or less, and still more preferably 6 or less. In other words, the ratio ([NH$_2$]/[COOH]) is preferably 0.1 to 50.

When the ratio ([NH$_2$]/[COOH]) is 0.1 or more, an even higher crystallization rate can be exhibited, and good hydrolysis resistance can be exhibited. When the ratio ([NH$_2$]/[COOH]) is 50 or less, even more excellent heat resistance is exhibited.

(Method for Producing Polyamide (A))

The polyamide (A) can be produced by any method known as a method for producing a polyamide. For example, the polyamide (A) can be produced by a method such as a melt polymerization method, a solid phase polymerization method, or a melt extrusion polymerization method using a dicarboxylic acid and a diamine as raw materials. Among these, a solid phase polymerization method is preferable from the viewpoint that thermal deterioration during polymerization can be more favorably prevented.

The polyamide (A) can be produced, for example, by first adding a diamine, a dicarboxylic acid, and optionally a catalyst and a terminal blocking agent all at once to produce a nylon salt, then heating and polymerizing the nylon salt at a temperature of 200 to 250°C to form a prepolymer, and further solid phase polymerizing the prepolymer or polymerizing the prepolymer using a melt extruder. When the final stage of the polymerization is performed by solid phase polymerization, the polymerization is preferably performed under reduced pressure or in an inert gas stream, and when the polymerization temperature is within the range of 200 to 280°C, the polymerization rate is high, the producibility is excellent, and coloring and gelling can be effectively prevented. When the final stage of the polymerization is performed using a melt extruder, the polymerization temperature is preferably 370°C or lower, and when the polymerization is performed under such conditions, there is almost no decomposition, and a polyamide (A) with little deterioration is obtained.

Examples of the catalyst that can be used when the polyamide (A) is produced include phosphoric acid, phosphorous acid, hypophosphorous acid, and a salt or an ester thereof. Examples of the salt or ester include a salt of phosphoric acid, phosphorous acid, or hypophosphorous acid with a metal such as potassium, sodium, magnesium, vanadium, calcium, zinc, cobalt, manganese, tin, tungsten, germanium, titanium, or antimony; an ammonium salt of phosphoric acid, phosphorous acid, or hypophosphorous acid; and an ethyl ester, an isopropyl ester, a butyl ester, a hexyl ester, an isodecyl ester, an octadecyl ester, a decyl ester, a stearyl ester, and a phenyl ester of phosphoric acid, phosphorous acid, or hypophosphorous acid.

The amount of the catalyst used is preferably 0.01% by mass or more, and more preferably 0.05% by mass or more, and is preferably 1.0% by mass or less, and more preferably 0.5% by mass or less with respect to 100% by mass of the total mass of the raw materials. In other words, the amount of the catalyst used is preferably 0.01 to 1.0% by mass with respect to 100% by mass of the total mass of the raw materials.

When the amount of the catalyst used is the lower limit or more, the polymerization proceeds well. Further, when the amount of the catalyst used is the upper limit or less, impurities derived from the catalyst are less likely to be generated, and for example, when a polyamide composition is formed into a film, defects due to the impurities can be prevented.

[Halogenated Flame Retardant (B)]

The polyamide composition of the present embodiment contains a halogenated flame retardant (B). By the incorporation of the halogenated flame retardant (B), a polyamide composition with improved flame retardancy is obtained.

The halogenated flame retardant (B) contained in the polyamide composition of the present embodiment is not particularly limited, and a compound known as a flame retardant containing a halogen element can be used, and examples thereof include a brominated flame retardant (B1) and a chlorinated flame retardant (B2), and a brominated flame retardant (B1) is preferable. One kind of these may be used alone or two or more kinds of these may be used in combination.

(Brominated Flame Retardant (B1))

Examples of the brominated flame retardant (B 1) include hexabromocyclododecane, decabromodiphenyl oxide, octabromodiphenyl oxide, tetrabromobisphenol A, bis(tribromophenoxy)ethane, bis(pentabromophenoxy)ethane, a tetrabromobisphenol A epoxy resin, tetrabromobisphenol A carbonate, ethylene(bistetrabromophthal)imide, ethylenebispentabromodiphenyl, tris(tribromophenoxy)triazine, bis(dibromopropyl)tetrabromobisphenol A, bis(dibromopropyl)tetrabromobisphenol S, a brominated polyphenylene ether such as poly(di)bromophenylene ether, a brominated polystyrene such as polydibromostyrene, polytribromostyrene, or a crosslinked brominated polystyrene, a brominated crosslinked aromatic polymer, a brominated epoxy resin, a brominated phenoxy resin, a brominated styrene-maleic anhydride polymer, tetrabromobisphenol S, tris(tribromoneopentyl)phosphate, polybromotrimethylphenylindane, and tris(dibromopropyl)-isocyanurate. The brominated polystyrene may be a modified brominated polystyrene to which epoxy acrylate or the like is added.

From the viewpoint of lowering the amount of a corrosive gas generated during melt processing such as extrusion and molding, and improving the flame retardancy and mechanical properties of an electrical part or an electronic part, a brominated polyphenylene ether and a brominated polystyrene are preferable, and a brominated polystyrene is more preferable as the brominated flame retardant (B1).

The brominated polystyrene can be produced, for example, by a method in which a styrene monomer is polymerized to produce a polystyrene, and then a benzene ring of the polystyrene is brominated; or a method in which a brominated styrene monomer such as bromostyrene, dibromostyrene, or tribromostyrene is polymerized.

The bromine content in the brominated polystyrene is preferably 55 to 75% by mass, and more preferably 55 to 70% by mass. By setting the bromine content to 55% by mass or more, the amount of bromine necessary for flame retardation can be satisfied by the small content of the brominated polystyrene, and a lowering of the mechanical properties of the polyamide (A) is also prevented, so that a polyamide composition excellent in mechanical properties and heat resistance can be obtained. In addition, by setting the bromine content to 75% by mass or less, it is difficult to cause thermal decomposition during melt processing such as extrusion and molding, and generation of a gas or the like can be prevented, so that a polyamide composition excellent in heat discoloration resistance can be obtained.

(Chlorinated Flame Retardant (B2))

Examples of the chlorinated flame retardant (B2) include chlorinated paraffin, chlorinated polyethylene, dodecachloropentacyclooctadeca-7,15-diene ("Dechlorane Plus 25", manufactured by Occidental Chemical Corporation), and HET anhydride.

The polyamide composition of the present embodiment preferably contains the above-mentioned halogenated flame retardant (B) in an amount of 5 parts by mass or more and 100 parts by mass or less, more preferably 10 parts by mass or more and 75 parts by mass or less, still more preferably 30 parts by mass or more and 70 parts by mass or less, and even more preferably 40 parts by mass or more and 60 parts by mass or less with respect to 100 parts by mass of the polyamide (A). By setting the content of the halogenated flame retardant (B) to 5 parts by mass or more, a polyamide composition excellent in flame retardancy can be obtained. Further, by setting the content of the halogenated flame retardant (B) to 100 parts by mass or less, generation of a decomposed gas during melt kneading, a decrease in fluidity (especially thin-wall fluidity) during molding, and adhesion of a contaminant to a molding die can be prevented, and also a lowering of the mechanical properties and appearance of a molded article can be prevented. In the case of using multiple types of halogenated flame retardants (B), the total amount thereof may fall within the above-mentioned range.

[Filler (C)]

The polyamide composition of the present embodiment may further contain a filler (C). Use of the filler (C) can provide a polyamide composition excellent in flame retardancy, heat resistance, moldability, and mechanical strength with a thin wall.

As the filler (C), those having various forms, such as a fibrous form, a platy form, an acicular form, a powdered form, and a cloth-like form, can be used. Specific examples thereof include an inorganic or organic fibrous filler (C1) such as a glass fiber, a carbon fiber, a wholly aromatic polyamide fiber (aramid fiber), a liquid crystal polymer (LCP) fiber, a gypsum fiber, a brass fiber, a ceramic fiber, or a boron whisker fiber; a platy filler such as a glass flake or mica; an acicular filler (C2) such as a potassium titanate whisker, an aluminum borate whisker, a calcium carbonate whisker, a magnesium sulfate whisker, wollastonite, sepiolite, xonotlite, or a zinc oxide whisker; a powdered filler such as aluminum nitride, boron nitride, potassium titanate, aluminum silicate (kaolin, clay, pyrophyllite, or bentonite), calcium silicate, magnesium silicate (attapulgite), aluminum borate, calcium sulfate, barium sulfate, magnesium sulfate, asbestos, a glass bead, carbon black, graphene, graphite, a carbon nanotube, silicon carbide, sericite, hydrotalcite, montmorillonite, molybdenum disulfide, an ultra-high molecular weight polyethylene particle, a phenol resin particle, a crosslinked styrene-based resin particle, or a crosslinked acrylic resin particle; and a cloth-like filler such as a glass cloth. One kind of these may be used alone or two or more kinds of these may be used in combination.

For the purpose of enhancing the dispersibility in the polyamide (A) and adhesiveness, the surface of the filler (C) may be subjected to a surface treatment with a silane coupling agent, a titanium coupling agent, a polymer compound such as an acrylic resin, a urethane resin, or an epoxy resin, or another low-molecular weight compound.

Among the fillers (C), at least one selected from the group consisting of the fibrous filler (C1) and the acicular filler (C2) is preferable because the cost is low, and a molded article having a high mechanical strength is obtained. From the viewpoint of high strength and low cost, the fibrous filler (C1) is preferable, and a glass fiber is more preferable. From the viewpoint of obtaining a molded article having high surface smoothness, an acicular filler (C2) is preferable.

As the fibrous filler (C1) and the acicular filler (C2), at least one selected from the group consisting of a glass fiber, wollastonite, a potassium titanate whisker, a calcium carbonate whisker, and an aluminum borate whisker is preferable, at least one selected from the group consisting of a glass fiber and wollastonite is more preferable, and a glass fiber is still more preferable.

The average fiber length of the fibrous filler (C1) is preferably 1 to 10 mm, more preferably 1 to 7 mm, and still more preferably 2 to 4 mm. Further, from the viewpoint of obtaining a mechanical strength, the average fiber diameter of the fibrous filler (C1) is preferably 6 to 20 $\mu$m, and more preferably 6 to 15 $\mu$m.

The average fiber length and the average fiber diameter of the fibrous filler (C1) can be determined through an image analysis with an electron microscope by measuring a fiber length and a fiber diameter of each of arbitrarily selected 400 fibers of the fibrous filler (C1) and calculating the respective average values.

Further, the average fiber length and the average fiber diameter of the fibrous filler (C1) in the polyamide composition or a molded article formed by molding the polyamide composition can be determined, for example, by dissolving the polyamide composition or the molded article in an organic solvent, extracting the fibrous filler (C1), and performing an image analysis with an electron microscope in the same manner as described above.

Examples of a cross-sectional shape of each of the fibrous filler (C1) and the acicular filler (C2) include a circle, a rectangle, an oval close to a rectangle, an ellipse, a cocoon-like shape, and a cocoon-like shape in which a central part thereof in the longitudinal direction is constricted. Above all, the cross-sectional shape of each of the fibrous filler (C1) and the acicular filler (C2) is preferably a circle, a rectangle, an oval close to a rectangle, an ellipse, or a cocoon-like shape.

When the fibrous filler (C1) is a glass fiber, examples of a specific composition include an E-glass composition, a C-glass composition, an S-glass composition, and an alkali-resistant glass composition. Further, the tensile strength of the glass fiber is arbitrary, but is usually 290 kg/mm$^2$ or more. Above all, E-glass is preferable from the viewpoint of easy availability. Such a glass fiber is preferably subjected to a surface treatment with a silane coupling agent such as γ-methacryloxypropyltrimethoxysilane, γ-glycidoxypropyltrimethoxysilane, or γ-aminopropyltriethoxysilane, and the adhesion amount thereof is usually 0.01% by mass or more with respect to the mass of the glass fiber (the total amount of the glass fiber and the surface treatment agent).

When the polyamide composition of the present embodiment contains the filler (C), the content of the filler (C) is preferably 0.1 parts by mass or more and 200 parts by mass or less, more preferably 1 part by mass or more and 180 parts by mass or less, and still more preferably 5 parts by mass or more and 150 parts by mass or less with respect to 100 parts by mass of the polyamide (A). By setting the content of the filler (C) to 0.1 parts by mass or more with respect to 100 parts by mass of the polyamide (A), the toughness, mechanical strength, and the like of the polyamide composition of the present embodiment are improved, and by setting the content of the filler (C) to 200 parts by mass or less, a polyamide composition excellent in moldability is obtained.

[Flame Retardant Aid (D)]

The polyamide composition of the present embodiment may further contain a flame retardant aid (D). Use of the flame retardant aid (D) in combination with the halogenated flame retardant (B) enables the polyamide composition of the present embodiment and the molded article containing the polyamide composition to exhibit more excellent flame retardancy.

Examples of the flame retardant aid (D) include antimony-based compounds such as antimony oxides such as diantimony trioxide, diantimony tetroxide, and diantimony pentoxide, and antimonates such as sodium antimonate; melamine-based compounds such as melamine orthophosphate, melamine pyrophosphate, melamine borate, and melamine polyphosphate; tin oxides such as tin monoxide and tin dioxide; iron oxides such as ferric oxide and γ-iron oxide; metal oxides such as aluminum oxide, silicon oxide (silica), titanium oxide, zirconium oxide, manganese oxide, molybdenum oxide, cobalt oxide, bismuth oxide, chromium oxide, tin oxide, nickel oxide, copper oxide, and tungsten oxide; metal hydroxides such as aluminum hydroxide; metal powders such as aluminum, iron, titanium, manganese, zinc, molybdenum, cobalt, bismuth, chromium, tin, antimony, nickel, copper, and tungsten; metal carbonates such as zinc carbonate, magnesium carbonate, and barium carbonate; metal borates such as zinc borate and calcium borate; zinc tin oxides such as zinc tin trioxide; and silicones. However, those that fall under the filler (C) are excluded. One kind of these may be used alone or two or more kinds of these may be used in combination.

Among those described above, at least one selected from the group consisting of an antimony-based compound, a melamine-based compound, a metal oxide, a metal hydroxide, a metal borate, and a zinc tin oxide is preferable, and at least one selected from the group consisting of diantimony trioxide, diantimony tetroxide, diantimony pentoxide, sodium antimonate, melamine orthophosphate, melamine pyrophosphate, melamine borate, melamine polyphosphate, aluminum oxide, aluminum hydroxide, zinc borate, and zinc tin trioxide is more preferable.

It is preferable to incorporate the flame retardant aid (D) in a powdered form in the polyamide composition of the present embodiment. The upper limit of the average particle diameter thereof is preferably 30 μm, more preferably 15 μm, still more preferably 10 μm, and particularly preferably 7 μm.On the other hand, the lower limit of the average particle diameter of the flame retardant aid (D) is preferably 0.01 μm.When the average particle diameter is 0.01 to 30 μm, the flame retardancy of the obtained polyamide composition is improved.

In the description herein, the "average particle diameter" refers to a volume average particle diameter and can be determined from the particle diameter at which the cumulative volume is 50% (50% particle diameter D50) in the particle size distribution measured using a laser diffraction particle size distribution analyzer.

When the polyamide composition of the present embodiment contains the flame retardant aid (D), the content thereof is preferably 1 part by mass or more and 30 parts by mass or less, more preferably 1 part by mass or more and 25 parts by mass or less, still more preferably 3 parts by mass or more and 20 parts by mass or less, and even more preferably 3 parts by mass or more and 15 parts by mass or less with respect to 100 parts by mass of the polyamide (A).

[Additional Additives]

The polyamide composition of the present embodiment may contain additional additives as needed in addition to the above-mentioned polyamide (A) and halogenated flame retardant (B), and the filler (C) and the flame retardant aid (D) to be used as needed.

Examples of the additional additives include a stabilizer such as a copper compound; an antioxidant such as a hindered phenol-based antioxidant, a hindered amine-based antioxidant, a phosphorus-based antioxidant, or a thio-based antioxidant; a colorant; a UV absorber; a light stabilizer; an antistatic agent; a heat stabilizer; a nucleating agent; a plasticizer; a sliding agent; a lubricant; a dispersant; an oxygen absorber; a hydrogen sulfide adsorbent; a crystallization retardant; an impact modifier such as an α-olefin-based copolymer or rubber; and an anti-drip agent such as a fluororesin.

The content of the above-mentioned additional additives is not particularly limited as long as the effects of the present invention are not impaired, but is preferably 0.02 parts by mass or more and 200 parts by mass or less, more preferably 0.03 parts by mass or more and 100 parts by mass or less, still more preferably 0.05 parts by mass or more and 50 parts by mass or less, and even more preferably 0.1 parts by mass or more and 20 parts by mass or less with respect to 100 parts by mass of the polyamide (A).

In the total amount of the polyamide composition of the present embodiment, the total content of the polyamide (A) and the halogenated flame retardant (B) is preferably 40% by mass or more, more preferably 50% by mass or more, and even more preferably 60% by mass or more.

By the incorporation of the polyamide (A) and the halogenated flame retardant (B), the polyamide composition of the present embodiment has excellent flame retardancy, moldability, and hydrolysis resistance while maintaining the excellent physical properties of the polyamide (A).

(Method for Producing Polyamide Composition)

The method for producing the polyamide composition is not particularly limited, and a method capable of uniformly mixing the polyamide (A), the halogenated flame retardant (B), and the filler (C), the flame retardant aid (D), and the additive to be used as needed can be preferably adopted. For the mixing, in general, a method of melt kneading using a single screw extruder, a twin screw extruder, a kneader, a Banbury mixer, or the like is preferably adopted. The melt kneading conditions are not particularly limited, and examples thereof include a method of melt kneading for about 1 to 30 minutes at a temperature in the range of about 10 to 50°C higher than the melting point of the polyamide.

(Physical Properties of Polyamide Composition)

The polyamide composition preferably has a flexural strength of 100 MPa or more, and more preferably 150 MPa or more. Further, the polyamide composition preferably has a flexural modulus of 2 GPa or more, and more preferably 5 GPa or more. When the flexural strength and the flexural modulus are within the above-mentioned ranges, a polyamide composition excellent in mechanical properties can be obtained.

The flexural strength and the flexural modulus of the polyamide composition can be obtained by injection molding the polyamide composition into a 4 mm thickness test piece and then performing a flexural test, and more specifically, can be obtained by the method described in the Examples.

<Molded Body>

In one embodiment, a molded body containing the above-mentioned polyamide composition can be provided. A method for producing the molded body is not particularly limited, and any known method can be used. Further, an additive such as a chain extender may be added during molding, and further a treatment such as a heat treatment or electron beam crosslinking may be performed after molding.

A molded article of the present embodiment can be used as an electric part, an electronic part, an automobile part, an industrial part, a faucet part, a fiber, a film, a sheet, household goods, leisure goods, and other various molded articles of arbitrary shapes and applications.

Examples of the electric part and the electronic part include connectors such as an FPC connector, a B to B connector, a card connector, an SMT connector (such as a coaxial connector), and a memory card connector; SMT relays; SMT bobbins; sockets such as a memory socket and a CPU socket; switches such as a command switch and an SMT switch; optical components such as an optical fiber component and an optical sensor; LED application parts such as an LED reflector; and electronic substrates such as a solar cell substrate, an LED-mounted substrate, a flexible printed wiring board, and a resin-molded circuit board.

Examples of the automobile part include cooling parts such as a thermostat housing, a coolant control valve housing, a thermal management module housing, a radiator tank, a radiator hose, a water outlet, a water inlet, a water pump housing, and a rear joint; intake and exhaust system parts such as an intercooler tank, an intercooler case, a turbo duct pipe, an EGR cooler case, a resonator, a throttle body, an intake manifold, and a tail pipe; fuel system parts such as a fuel delivery pipe, a gasoline tank, a quick connector, a canister, a pump module, a fuel pipe, an oil strainer, a lock nut, and a seal material; structural components such as a mount bracket, a torque rod, and a cylinder head cover; drive system components such as a bearing retainer, a gear tensioner, a head lamp actuator gear, a throttle valve gear, a slide door roller, and a clutch peripheral component; brake system components such as an air brake tube; in-vehicle electrical components such as a wire harness connector in an engine room, a motor component, a sensor, an ABS bobbin, a combination switch, and an in-vehicle switch; and interior and exterior parts such as a slide door damper, a door mirror stay, a door mirror bracket, an inner mirror stay, a roof rail, an engine mount bracket, an inlet pipe of an air cleaner, a door checker, a plastic chain, an emblem, a clip, a breaker cover, a cup holder, an airbag, a fender, a spoiler, a radiator support, a radiator grille, a louver, an air scoop, a hood bulge, a back door, and a fuel sender module.

Examples of the industrial part include a gas pipe, an oil field drilling pipe, a hose, an anti-termite cable (such as a communication cable or a pass cable), a coating part of a powder coated product (such as an inner coating of a water pipe), a submarine oil field pipe, a pressure-resistant hose, a hydraulic tube, a paint tube, a housing and an impeller of a fuel pump, a separator, a supercharging duct, a butterfly valve, a conveyor roller bearing, a railroad tie spring holder, an outboard engine cover, a generator engine cover, a wind generator blade, an irrigation valve, a large switch, and a monofilament (an extruded yarn) of a fishing net or the like.

Examples of the faucet part include a housing of a part for transporting tap water, a housing of a part for storing tap water, a filter casing housing, a tap housing, a pipe housing, a housing of a bathroom faucet (such as a hot water switching valve or a water volume switching valve), a sanitary component housing, a kitchen faucet housing, a water heater housing, a valve part (a shut-off ball, a slide, or a cylinder), a valve part housing, a toilet water stopper housing, a housing in a shower head, a valve housing of a water heater, a joint for residential plumbing (such as underfloor piping), a joint for a bathroom faucet, a joint for tap water piping, a pipe joint, a water meter housing, a water meter part (a bearing, a propeller, or a pin), a water meter or a gas meter housing, a distributor housing, a valve/pump housing for a household apparatus, a steam-resistant part of a steam iron, an inner container of an electric kettle, a dishwasher part (a washing tank, a washing nozzle, a basket), a pump housing, a pump part (for example, a turbine wheel or an impeller), a housing of a water supply system (such as a hot water tank), a heating system housing, a cooling system housing, a water flow control valve, a pressure reducing valve, a relief valve, a solenoid valve, a three-way valve, a thermo valve, a hot water temperature sensor, a water volume sensor, and a bathtub adapter.

Examples of the fiber include an airbag base fabric, a heat-resistant filter, a reinforcing fiber, a brush bristle, a fishing line, a tire cord, an artificial turf, a carpet, and a fiber for a seat sheet.

Examples of the film and the sheet include heat-resistant adhesive tapes such as a heat-resistant masking tape and an industrial tape; materials for magnetic tapes such as a cassette tape, a data storage magnetic tape for digital data storage, and a video tape; food packaging materials such as a retort food pouch, individual packaging for confectionery, and packaging for processed meat products; and electronic part packaging materials such as packaging for semiconductor packages.

Examples of the household goods include valve/pump housings for tea and coffee makers; valve/pump housings for cooking appliances such as a rice cooker and a steamer; steam-resistant parts of cooking appliances such as a rice cooker and a steamer (such as a top lid of a rice cooker); sliding parts of cooking appliances such as a rice cooker and a steamer (such as a gear); sliding parts of cooking utensils for business use (such as a gear for a gear pump); and steam-resistant parts of cooking utensils for business use (such as a pipe of a rice cooker for business use).

Examples of the leisure goods include a sport shoe insole, racket frame and grommets, golf club head and sleeve, fishing reel and rod, a boat screw, and bicycle suspension, gear, saddle, and bottle cage.

In particular, the polyamide composition of the present embodiment is excellent in heat resistance, flame retardancy, and moldability, and also excellent in hydrolysis resistance, and therefore can be suitably used for an electric part and an electronic part for which a large number of parts are required to be produced in a short time. Specifically, the polyamide composition can be suitably used for an electric part and an electronic part including an SMT process, more specifically, a surface-mounted part such as an SMT-compatible connector, an SMT relay, an SMT bobbin, a socket, a command switch, an SMT switch, a camera module, a power supply part, a sensor, a capacitor seat plate, a hard disk part, a resistor, a fuse holder, a coil bobbin, or an IC housing.

Examples

Hereinafter, the present invention will be specifically described with reference to Examples and Comparative Examples, but the present invention is not limited thereto.

Each evaluation in Examples and Comparative Examples was performed in accordance with the following methods.

<Polyamide>

· Inherent viscosity

The inherent viscosity (dL/g) of each of the polyamides obtained in Examples and Comparative Examples, using concentrated sulfuric acid as a solvent at a concentration of 0.2 g/dL and a temperature of 30°C, was determined by the following formula.

$$\eta = [\ln(t_1/t_0)]/c$$

In the above formula, $\eta$ represents the inherent viscosity (dL/g), $t_0$ represents the flow-down time (sec) of the solvent (concentrated sulfuric acid), ti represents the flow-down time (sec) of the sample solution, and c represents the concentration (g/dL) of the sample in the sample solution (that is, 0.2 g/dL).

· Melting point, crystallization temperature, and glass transition temperature

The melting point, crystallization temperature, and glass transition temperature of each of the polyamides obtained in Examples and Comparative Examples were measured using a differential scanning calorimetry analyzer "DSC7020" manufactured by Hitachi High-Tech Science Corporation.

The melting point and crystallization temperature were measured in accordance with ISO 11357-3 (2nd edition, 2011). Specifically, in a nitrogen atmosphere, a sample (polyamide) was heated from 30°C to 340°C at a rate of 10°C/min, held at 340°C for 5 minutes to completely melt the sample, then cooled to 50°C at a rate of 10°C/min, held at 50°C for 5 minutes, and then heated again to 340°C at a rate of 10°C/min. The peak temperature of the exothermic peak that appeared when the temperature was lowered was defined as the crystallization temperature, and the peak temperature of the endothermic peak that appeared when the temperature was raised again was defined as the melting point (°C).

The glass transition temperature (°C) was measured in accordance with ISO 11357-2 (2nd edition, 2013). Specifically, in a nitrogen atmosphere, a sample (polyamide) was heated from 30°C to 340°C at a rate of 20°C/min, held at 340°C for 5 minutes to completely melt the sample, then cooled to 50°C at a rate of 20°C/min, and held at 50°C for 5 minutes. The temperature at the inflection point that appeared when the temperature was raised again to 200°C at a rate of 20°C/min was defined as the glass transition temperature (°C).

· Crystallization rate

The crystallization rate of each of the polyamides obtained in Examples and Comparative Examples was obtained by the following formula (Formula 1).

$$\text{Crystallization rate } (°C^{-1}) = 1/(\text{melting point } (°C) - \text{crystallization temperature } (°C))$$

(Formula 1)

In (Formula 1), the "melting point (°C)" and the "crystallization temperature (°C)" are measured values obtained by the above-mentioned method. In Table 1, the unit of the crystallization rate is expressed as "1/°C", which has the same meaning as "°C$^{-1}$".

· Amount of terminal amino groups ([NH$_2$])

The amount of terminal amino groups of each of the polyamides obtained in Examples and Comparative Examples was determined by adding thymol blue, which is an indicator, to a solution in which 1 g of the polyamide was dissolved in 30 mL of phenol, and titrating the solution using a 0.01 mol/L aqueous hydrochloric acid solution, followed by calculation. In Table 1, the amount of terminal amino groups of the polyamide is represented by [NH$_2$].

· Amount of terminal carboxy groups ([COOH])

The amount of terminal carboxy groups of each of the polyamides obtained in Examples and Comparative Examples was determined by titrating a solution, in which 0.5 g of the polyamide was dissolved in 40 mL of cresol, using a 0.01 mol/L aqueous potassium hydroxide solution by a potentiometric titration apparatus manufactured by Kyoto Electronics Co., Ltd., followed by calculation. In Table 1, the amount of terminal carboxy groups of the polyamide is represented by [COOH].

· Ratio ([NH$_2$]/[COOH])

A ratio ([NH$_2$]/[COOH]) was calculated from the values of the amount of terminal amino groups ([NH$_2$]) and the amount of terminal carboxy groups ([COOH]) obtained above.

<Polyamide Composition>

<<Production of Test Piece>>

An injection molding machine manufactured by Sumitomo Heavy Industries, Ltd. (clamping force: 100 tons, screw diameter: φ32 mm) was used, the polyamide compositions obtained in Examples and Comparative Examples were used, a cylinder temperature was set to a temperature 20 to 30°C higher than the melting point of the polyamide, and the polyamide compositions were molded with a T-runner mold to produce multi-purpose test pieces of type A1 (dumbbell-shaped test pieces described in JIS K 7139: 2009; 4 mm thickness, total length: 170 mm, parallel part length: 80 mm, parallel part width: 10 mm) under the condition of a mold temperature of 140°C in the case of the polyamide compositions of Examples 1 to 8 and 11 and Comparative Examples 1, 2, 4, and 5, and under the condition of a mold temperature of 170°C in the case of the polyamide compositions of Examples 9 and 10 and Comparative Example 3.

· Flexural strength and flexural modulus

A flexural strength (MPa) and a flexural modulus (GPa) were measured by a universal material testing machine (manufactured by Instron) under the conditions of a test speed of 2 mm/min and a distance between fulcrums of 64 mm in accordance with ISO 178 (2nd edition, 2012) using a multi-purpose test piece of type A1 (4 mm thickness) produced by the above-mentioned method.

· Color stability

A multi-purpose test piece of type A1 (4 mm thickness) produced by the above-mentioned method was subjected to a heat treatment in a hot air dryer at 150°C for 50 hours. A change in color of the test piece after the treatment was observed through visual inspection, and compared with the test piece before the heat treatment, and evaluation was made according to the following criteria. "A" and "B" were determined to be acceptable, and "C" was determined to be unacceptable.

[Evaluation criteria]

A: There is no change in color.
B: There is a slight change in color to yellow.
C: There is a clear change in color to yellow.

· Heat aging resistance

A multi-purpose test piece of type A1 (4 mm thickness) produced by the above-mentioned method was subjected to a heat treatment in a hot air dryer at 150°C for 50 hours. The molecular weights of the test piece after the treatment and the test piece which was not subjected to the heat treatment were measured, and the rate of change in molecular weight was calculated from the following formula (Formula 2). Evaluation was made based on the calculated rate of change in molecular weight according to the following criteria. "A" and "B" were determined to be acceptable, and "C" was determined to be unacceptable. The molecular weight of the test piece was measured according to the below-mentioned Measurement of molecular weight.

Rate of change in molecular weight (%) = ((molecular weight after heat treatment - molecular weight before heat treatment)/(molecular weight before heat treatment)) x 100

[Evaluation criteria]

A: The rate of change in molecular weight is less than ±10%.
B: The rate of change in molecular weight is ±10% or more and less than ±20%.
C: The rate of change in molecular weight is ±20% or more.

· Hydrolysis resistance

A multi-purpose test piece of type A1 (4 mm thickness) produced by the above-mentioned method was immersed in antifreeze (an aqueous solution obtained by 2-fold dilution of "Super Long Life Coolant" (Pink) manufactured by Toyota Motor Corporation) in a pressure-resistant container, and the pressure-resistant container was left to stand in a constant temperature bath set to 130° C for 100 hours. The molecular weights of the test piece which was taken out and the test piece which was not subjected to the immersion treatment were measured, and the rate of change in molecular weight was calculated from the following formula (Formula 3). Evaluation was made based on the calculated rate of change in molecular weight according to the following criteria. "A" and "B" were determined to be acceptable, and "C" was determined to be unacceptable. The molecular weight of the test piece was measured according to the below-mentioned Measurement of molecular weight.

Rate of change in molecular weight (%) = ((molecular weight after immersion treatment - molecular weight before immersion treatment)/(molecular weight before immersion treatment)) x 100

[Evaluation criteria]

A: The rate of change in molecular weight is less than ±10%.
B: The rate of change in molecular weight is ±10% or more and less than ±20%.
C: The rate of change in molecular weight is ±20% or more.

· Measurement of molecular weight

The molecular weight of the multi-purpose test piece of type A1 was determined as a standard polymethylmethacrylate equivalent molecular weight by gel permeation chromatography (GPC). Specifically, an HFIP solution in which sodium trifluoroacetate was dissolved in a proportion of 0.85 g with respect to 1 kg of 1,1,1,3,3,3-hexafluoroisopropanol (HFIP) was used as an eluent, 1.5 mg of a sample (the above-mentioned multi-purpose test piece of type A1) was weighed in terms of resin, and dissolved in 3 mL of the above-mentioned eluent. The solution was allowed to pass through a 0.2 $\mu$m membrane filter to produce a measurement sample, and measurement was performed under the following conditions.

(Measurement conditions)

Apparatus: HLC-8320GPC (manufactured by Tosoh Corporation)
Column: Two TSKgel SuperHM-H columns (manufactured by Tosoh Corporation) were connected in series.
Eluent: 10 mmol/L sodium trifluoroacetate/HFIP solution
Flow rate: 0.5 mL/min (reference column: 0.25 mL/min)
Sample injection volume: 30 $\mu$L
Column temperature: 40°C
Standard polymethylmethacrylate: Shodex Standard M-75 from Showa Denko K.K., Polymethylmethacrylate from Agilent Technologies, Inc. Molecular weight: 1010, 535 Polymethylmethacrylate
Detector: UV (254 nm) detector

· Moldability

The shortest cooling time in which no sink marks or voids were observed on the test piece and the test piece was smoothly released from the mold when the multi-purpose test piece of type A1 (4 mm thickness) was produced in the above-mentioned <<Production of Test Piece>> was set. Evaluation was made based on the cooling time according to the following criteria. "A" and "B" were determined to be acceptable, and "C" was determined to be unacceptable.

[Evaluation criteria]

A: The cooling time is 10 seconds or less.
B: The cooling time is more than 10 seconds and 15 seconds or less.
C: The cooling time is more than 15 seconds.

· Flame retardancy

The flame retardancy was evaluated according to the provisions of UL-94 standard.
An injection molding machine manufactured by Nissei Plastic Industrial Co., Ltd. (clamping force: 80 tons, screw diameter: φ26 mm) was used. The polyamide compositions obtained in Examples and Comparative Examples were used, a cylinder temperature was set to a temperature 20 to 30°C higher than the melting point of the polyamide, and the polyamide compositions were molded with a T-runner mold under the condition of a mold temperature of 140°C in the case of the polyamide compositions of Examples 1 to 9 and 11 and Comparative Examples 1 to 3 and 5, and under the condition of a mold temperature of 170°C in the case of the polyamide compositions of Example 10 and Comparative Example 4. Test pieces having a thickness of 0.75 mm, a width of 13 mm, and a length of 125 mm were obtained.
Subsequently, an upper end of each of the obtained test pieces was clamped with a clamp to vertically fix the test piece, and a blue predetermined flame having a height of 20 ± 1 mm was applied to a lower end of the test piece for 10 seconds and then kept away, and a burning time (first time) of the test piece was measured. Immediately after the flame was extinguished, flame was again applied to the lower end and then kept away, and a burning time (second time) of the test piece was measured. With respect to 5 pieces, the same measurement was repeated to obtain a total of 10 data including 5 data for the first burning time and 5 data for the second burning time. Evaluation was made according to the following evaluation criteria while the sum of 10 data was represented by T and the maximum value of 10 data was represented by M.
In addition, the presence or absence of a drip during contact with the flame was checked through visual inspection.

[Evaluation Criteria]

V-0: T was 50 seconds or less, and M was 10 seconds or less, the test piece did not burn up to the clamp, and even when the flamed molten material fell, cotton located 12 inches below the test piece was not ignited.
V-1: T was 250 seconds or less, and M was 30 seconds or less, the test piece did not burn up to the clamp, and even when the flamed molten material fell, cotton located 12 inches below the test piece was not ignited.
V-2: T was 250 seconds or less, and M was 30 seconds or less; the test piece did not burn up to the clamp, the flamed molten material fell, and cotton located 12 inches below the test piece was ignited.
X: A case where all of the evaluation criteria of UL-94 described above were not satisfied.

· Blister resistance

An injection molding machine manufactured by Sumitomo Heavy Industries, Ltd. (clamping force: 18 tons, screw diameter: φ18 mm) was used. The polyamide compositions obtained in Examples and Comparative Examples were used, and a cylinder temperature was set to a temperature 20 to 30°C higher than the melting point of the polyamide. The polyamide compositions were molded (injection molded) with a T-runner mold under the condition of a mold temperature of 140°C in the case of the polyamide compositions of Examples 1 to 9 and 11 and Comparative Examples 1 to 3 and 5, and under the condition of a mold temperature of 170°C in the case of the polyamide compositions of Example 10 and Comparative Example 4. Test pieces (sheets) having a length of 30 mm, a width of 10 mm, and a thickness of 1 mm were produced.
The obtained test pieces were left to stand for 168 hours under the conditions of a temperature of 85°C and a relative humidity of 85%. Thereafter, the test pieces were subjected to a reflow test using an infrared heating furnace (SMT Scope, manufactured by SANYOSEIKO Co., Ltd.). In the reflow test, the temperature was raised from 25°C to 150°C over 60 seconds, then raised to 180°C over 90 seconds, and further raised to a peak temperature over 60 seconds, and kept at the peak temperature for 20 seconds.
The reflow test was performed by changing the peak temperature from 250°C to 270°C at intervals of 10°C. After completion of the reflow test, the appearance of the test pieces was observed through visual inspection. A critical temperature at which the test piece is not melted, and also blisters do not occur is defined as a blister resistant temperature, and a case where the blister resistant temperature is higher than 260°C is assigned as "A", a case where the blister resistant temperature is 250°C or higher and 260°C or lower is assigned as "B"; and a case where the blister resistant temperature is lower than 250°C is assigned as "C", which was used as an index of blister resistance. A case assigned as "A" or "B" is at a level that does not pose any problem in practical use.

[Example 1]

5400 g of terephthalic acid, 5260 g of a mixture [4/1/95 (molar ratio)] of 2-ethyl-1,7-heptanediamine, 2-propyl-1,6-hexanediamine, and 2-methyl-1,8-octanediamine, 121 g of benzoic acid, 10 g of sodium diphosphite monohydrate (0.1% by mass with respect to the total mass of the raw materials), and 4.8 L of distilled water were put into an autoclave having an internal volume of 40 L, and nitrogen replacement was performed. The mixture was stirred at 150°C for 30 minutes, and then the temperature inside the autoclave was raised to 220°C over 2 hours. At this time, the pressure inside the autoclave was increased to 2 MPa. Heating was continued for 5 hours while the pressure was maintained at 2 MPa, and the reaction was allowed to proceed by gradually removing the water vapor. Subsequently, the pressure was decreased to 1.3 MPa over 30 minutes, and the reaction was further allowed to proceed for 1 hour to obtain a prepolymer. The obtained prepolymer was dried at 100°C for 12 hours under reduced pressure, and pulverized to a particle diameter of 2 mm or less. This was subjected to solid phase polymerization at 230°C and 13 Pa (0.1 mmHg) for 10 hours to obtain a polyamide (A) having a melting point of 282°C.
The obtained polyamide (A), glycidyl methacrylate-modified polybrominated styrene ("Firemaster CP-44HF" manufactured by Chemtura Corporation, bromine content: 64%) as the halogenated flame retardant (B), tin zinc trioxide ("Flamtard S" manufactured by William Blythe Limited, catalog value: average particle diameter: 1.4 to 2.2 $\mu$m) as the flame retardant aid (D), a phenol-based heat stabilizer ("SUMILIZER GA-80" manufactured by Sumitomo Chemical Co., Ltd.) as a heat stabilizer, a low-molecular weight polyolefin lubricant ("HiWAX 200P" manufactured by Mitsui Chemicals, Inc.) as a lubricant, talc ("Micron White #5000S" manufactured by Hayashi Kasei Co., Ltd.) as a nucleating agent, and a fluororesin powder ("Teflon (registered trademark) 640J" manufactured by Chemours-Mitsui Fluoroproducts Co., Ltd.) as an anti-drip agent were fed from the upstream hopper of a twin screw extruder ("BTN-32" manufactured by Plastics Technology Co., Ltd.), and also a glass fiber ("ECS03-615" manufactured by Central Glass Fiber Co., Ltd., cross-sectional shape: circle, catalog value: average fiber length: 3 mm, average fiber diameter: 9 $\mu$m) as the filler (C) was fed in the proportion shown in Table 1 from the side feed port on the downstream side of the extruder, melt-kneaded, extruded, cooled, and cut to obtain a polyamide composition in a pellet form.

[Example 2]

A polyamide (A) having a melting point of 283°C and a polyamide composition were obtained in the same manner as in Example 1 except that the diamine unit (X) was changed to a mixture [5.6/0.4/94 (molar ratio)] of 2-ethyl-1,7-heptanediamine, 2-propyl-1,6-hexanediamine, and 2-methyl-1,8-octanediamine.

[Example 3]

A polyamide (A) having a melting point of 262°C and a polyamide composition were obtained in the same manner as in Example 1 except that the diamine unit (X) was changed to a mixture [12/3/85 (molar ratio)] of 2-ethyl-1,7-heptanediamine, 2-propyl-1,6-hexanediamine, and 2-methyl-1,8-octanediamine.

[Example 4]

A polyamide (A) having a melting point of 258°C and a polyamide composition were obtained in the same manner as in Example 1 except that the diamine unit (X) was changed to a mixture [16/4/80 (molar ratio)] of 2-ethyl-1,7-heptanediamine, 2-propyl-1,6-hexanediamine, and 2-methyl-1,8-octanediamine.

[Example 5]

A polyamide (A) having a melting point of 288°C and a polyamide composition were obtained in the same manner as in Example 1 except that the diamine unit (X) was changed to a mixture [4/1/20/75 (molar ratio)] of 2-ethyl-1,7-heptanediamine, 2-propyl-1,6-hexanediamine, 2-methyl-1,8-octanediamine, and 1,9-nonanediamine.

[Example 6]

A polyamide composition was obtained in the same manner as in Example 5 except that the composition was changed to the proportions shown in Table 1.

[Example 7]

A polyamide (A) and a polyamide composition were obtained in the same manner as in Example 1 except that 5380 g of a mixture [4/1/20/75 (molar ratio)] of 2-ethyl-1,7-heptanediamine, 2-propyl-1,6-hexanediamine, 2-methyl-1,8-octanediamine, and 1,9-nonanediamine was used as the diamine unit (X) to set the amount of terminal amino groups and the amount of terminal carboxy groups to the contents shown in Table 1.

[Example 8]

A polyamide (A) and a polyamide composition were obtained in the same manner as in Example 1 except that 5540 g of a mixture [4/1/20/75 (molar ratio)] of 2-ethyl-1,7-heptanediamine, 2-propyl-1,6-hexanediamine, 2-methyl-1,8-octanediamine, and 1,9-nonanediamine was used as the diamine unit (X) to set the amount of terminal amino groups and the amount of terminal carboxy groups to the contents shown in Table 1.

[Example 9]

A polyamide (A) having a melting point of 307°C and a polyamide composition were obtained in the same manner as in Example 1 except that the diamine unit (X) was changed to a mixture [0.5/14.5/85 (molar ratio)] of 2-ethyl-1,7-heptanediamine, 2-methyl-1,8-octanediamine, and 1,9-nonanediamine.

[Comparative Example 1]

The polyamide (A) obtained in Example 5 was used for evaluation as it was.

[Comparative Example 2]

A polyamide having a melting point of 285°C and a polyamide composition were obtained in the same manner as in Example 1 except that the diamine unit (X) was changed to only the 2-methyl-1,8-octanediamine unit.

[Comparative Example 3]

A polyamide having a melting point of 306°C and a polyamide composition were obtained in the same manner as in Example 1 except that the diamine unit (X) was changed to a mixture [15/85 (molar ratio)] of 2-methyl-1,8-octanediamine and 1,9-nonanediamine.

[Example 10]

A polyamide (A) having a melting point of 283°C and a polyamide composition were obtained in the same manner as in Example 5 except that the dicarboxylic acid unit (Y) was changed to 7027 g of 2,6-naphthalenedicarboxylic acid.

[Comparative Example 4]

A polyamide having a melting point of 294°C and a polyamide composition were obtained in the same manner as in Example 10 except that the diamine unit (X) was changed to a mixture [15/85 (molar ratio)] of 2-methyl-1,8-octanediamine and 1,9-nonanediamine.

[Example 11]

A polyamide (A) having a melting point of 289°C and a polyamide composition were obtained in the same manner as in Example 1 except that the diamine unit (X) was changed to a mixture [4/1/20/75 (molar ratio)] of 2-ethyl-1,7-heptanediamine, 2-propyl-1,6-hexanediamine, 2-methyl-1,8-octanediamine, and 1,10-decanediamine.

[Comparative Example 5]

A polyamide having a melting point of 301°C and a polyamide composition were obtained in the same manner as in Example 1 except that the diamine unit (X) was changed to a mixture [20/80 (molar ratio)] of 2-methyl-1,8-octanediamine and 1,10-decanediamine.

The compositions of Examples and Comparative Examples and the measurement results thereof are shown in Table 1.

Table 1-1

| | | Unit | Ex. 1 | Ex. 2 | Ex. 3 | Ex. 4 | Ex. 5 | Ex. 6 | Ex. 7 | Ex. 8 | Ex. 9 | Comp. Ex. 1 | Comp. Ex. 2 | Comp. Ex. 3 | Ex. 10 | Comp. Ex. 4 | Ex. 11 | Comp. Ex. 5 |
|---|---|---|---|---|---|---|---|---|---|---|---|---|---|---|---|---|---|---|
| Diamine unit (X) | EHDA | mol% | 4 | 5.6 | 12 | 16 | 4 | 4 | 4 | 4 | 0.5 | 4 | - | - | 4 | - | 4 | - |
| | PHDA | mol% | 1 | 0.4 | 3 | 4 | 1 | 1 | 1 | 1 | - | 1 | - | - | 1 | - | 1 | - |
| | MODA | mol% | 95 | 94 | 85 | 80 | 20 | 20 | 20 | 20 | 14.5 | 20 | 100 | 15 | 20 | 15 | 20 | 20 |
| | NMDA | mol% | - | - | - | - | 75 | 75 | 75 | 75 | 85 | 75 | - | 85 | 75 | 85 | - | - |
| | DMDA | mol% | - | - | - | - | - | - | - | - | - | - | - | - | - | - | 75 | 80 |
| | EHDA+PHDA | mol% | 5 | 6 | 15 | 20 | 5 | 5 | 5 | 5 | 0.5 | 5 | 0 | 0 | 5 | 0 | 5 | 0 |
| Dicarboxylic acid unit (Y) | TA | mol% | 100 | 100 | 100 | 100 | 100 | 100 | 100 | 100 | 100 | 100 | 100 | 100 | - | - | 100 | 100 |
| | NDCA | mol% | - | - | - | - | - | - | - | - | - | - | - | - | 100 | 100 | - | - |
| Physical properties of polyamide (A) or polyamide | Inherent viscosity | dl/g | 1.17 | 1.16 | 1.18 | 1.21 | 1.25 | 1.25 | 1.25 | 1.25 | 1.26 | 1.25 | 1.32 | 1.34 | 1.22 | 1.23 | 1.23 | 1.21 |
| | Melting point | °C | 282 | 283 | 262 | 258 | 288 | 288 | 288 | 288 | 307 | 288 | 285 | 306 | 283 | 294 | 289 | 301 |
| | Crystallization temperature | °C | 259 | 258 | 242 | 235 | 266 | 266 | 266 | 266 | 280 | 266 | 256 | 277 | 246 | 249 | 267 | 275 |
| | Glass transition temperature | °C | 124 | 123 | 116 | 112 | 120 | 120 | 120 | 120 | 123 | 120 | 125 | 123 | 135 | 136 | 121 | 123 |
| | Crystallization rate | 1/°C | 0.044 | 0.040 | 0.050 | 0.043 | 0.046 | 0.046 | 0.046 | 0.046 | 0.037 | 0.046 | 0.034 | 0.035 | 0.027 | 0.022 | 0.045 | 0.039 |
| | $[NH_2]$ | μmol/g | 15 | 18 | 20 | 25 | 12 | 12 | 70 | 150 | 10 | 12 | 18 | 10 | 28 | 22 | 12 | 8 |
| | [COOH] | μmol/g | 33 | 37 | 48 | 34 | 30 | 30 | 20 | 3 | 25 | 30 | 38 | 24 | 40 | 35 | 38 | 30 |
| | $[NH_2]/[COOH]$ | - | 0.5 | 0.5 | 0.4 | 0.7 | 0.4 | 0.4 | 3.5 | 50 | 0.4 | 0.4 | 0.5 | 0.4 | 0.7 | 0.6 | 0.3 | 0.3 |

"Ex." means Example,and "Comp. Ex." means Comparative Example.

Table 1-2

| Polyamide composition | | Unit | Ex. 1 | Ex. 2 | Ex. 3 | Ex. 4 | Ex. 5 | Ex. 6 | Ex. 7 | Ex. 8 | Ex. 9 | Comp. Ex. 1 | Comp. Ex. 2 | Comp. Ex. 3 | Ex. 10 | Comp. Ex. 4 | Ex. 11 | Comp. Ex. 5 |
|---|---|---|---|---|---|---|---|---|---|---|---|---|---|---|---|---|---|---|
| | Polyamide (A) or polyamide | parts by mass | 42 | 42 | 42 | 42 | 42 | 35 | 42 | 42 | 42 | 100 | 42 | 42 | 42 | 42 | 42 | 42 |
| | Halogenated flame retardant (B) | parts by mass | 21 | 21 | 21 | 21 | 21 | 17 | 21 | 21 | 21 | - | 21 | 21 | 21 | 21 | 21 | 21 |
| | Filler (C) | parts by mass | 33 | 33 | 33 | 33 | 33 | 45 | 33 | 33 | 33 | - | 33 | 33 | 33 | 33 | 33 | 33 |
| | Flame retardant aid (D) | parts by mass | 3 | 3 | 3 | 3 | 3 | 2 | 3 | 3 | 3 | - | 3 | 3 | 3 | 3 | 3 | 3 |
| | Heat stabilizer | parts by mass | 0.2 | 0.2 | 0.2 | 0.2 | 0.2 | 0.2 | 0.2 | 0.2 | 0.2 | - | 0.2 | 0.2 | 0.2 | 0.2 | 0.2 | 0.2 |
| | Lubricant | parts by mass | 0.3 | 0.3 | 0.3 | 0.3 | 0.3 | 0.3 | 0.3 | 0.3 | 0.3 | - | 0.3 | 0.3 | 0.3 | 0.3 | 0.3 | 0.3 |
| | Nucleating agent | parts by mass | 0.1 | 0.1 | 0.1 | 0.1 | 0.1 | 0.1 | 0.1 | 0.1 | 0.1 | - | 0.1 | 0.1 | 0.1 | 0.1 | 0.1 | 0.1 |
| | Anti-drip agent | parts by mass | 0.5 | 0.5 | 0.5 | 0.5 | 0.5 | 0.4 | 0.5 | 0.5 | 0.5 | - | 0.5 | 0.5 | 0.5 | 0.5 | 0.50 | 0.50 |

"Ex." means Example,and "Comp. Ex." means Comparative Example.

Table 1-3

| | | Unit | Ex. 1 | Ex. 2 | Ex. 3 | Ex. 4 | Ex. 5 | Ex. 6 | Ex. 7 | Ex. 8 | Ex. 9 | Comp. Ex. 1 | Comp. Ex. 2 | Comp. Ex. 3 | Ex. 10 | Comp. Ex. 4 | Ex. 11 | Comp. Ex. 5 |
|---|---|---|---|---|---|---|---|---|---|---|---|---|---|---|---|---|---|---|
| Physical properties of polyamide composition | Flexural strength | MPa | 260 | 260 | 261 | 263 | 252 | 284 | 251 | 248 | 263 | 115 | 245 | 257 | 268 | 265 | 260 | 262 |
| | Flexural modulus | GPa | 11.5 | 11.5 | 11.7 | 11.9 | 11.1 | 15.4 | 11.2 | 11.1 | 11.6 | 2.5 | 10.4 | 11.3 | 11.9 | 11.7 | 11.4 | 11.6 |
| | Color stability | - | A | A | A | A | A | A | B | B | A | A | A | A | A | A | A | A |
| | Heat aging resistance | - | A | A | A | A | A | A | B | B | A | A | A | A | A | A | A | A |
| | Hydrolysis resistance | - | A | A | A | A | B | B | A | A | B | C | C | C | B | C | B | C |
| | Moldability | - | A | A | A | A | A | A | A | A | B | B | C | C | B | C | A | C |
| | Flame retardancy | - | V-0 | V-0 | V-0 | V-0 | V-0 | V-0 | V-0 | V-0 | V-0 | X | V-0 | V-0 | V-0 | V-0 | V-0 | V-0 |
| | Blister resistance | - | A | A | A | A | A | A | A | A | A | C | C | A | A | A | A | A |

"Ex." means Example, and "Comp. Ex." means Comparative Example.

The abbreviations relating to the compounds used in Table 1 above and the contents of the compounds are as shown in Table 2 below. In addition, "(EHDA + PHDA)" in Table 1 represents the sum of the blending amounts (mol%) of EHDA and PHDA in the diamine unit (X).

Table 2

| Abbreviation | Compound |
| --- | --- |
| EHDA | 2-ethyl-1,7-heptanediamine |
| PHDA | 2-propyl-1,6-hexanediamine |
| MODA | 2-methyl-1,8-octanediamine |
| NMDA | 1,9-nonanediamine |
| DMDA | 1,10-decanediamine |
| TA | terephthalic acid |
| NDCA | 2,6-naphthalenedicarboxylic acid |

From Table 1, it can be seen that when Examples 1 to 9 and Comparative Examples 2 and 3, Example 10 and Comparative Example 4, and Example 11 and Comparative Example 5 are compared, Examples showed a higher crystallization rate and a shorter cooling time during injection molding. That is, it can be seen that in a polyamide containing the same dicarboxylic acid unit (Y), when 2-ethyl-1,7-heptanediamine and 2-propyl-1,6-hexanediamine are contained as the diamine unit (X1), the crystallization rate is high and the productivity is excellent. In addition, it can be seen that as compared with Comparative Examples 2 to 5 in which only 2-methyl-1,8-octanediamine in which the branched structure is a methyl group is contained as the branched aliphatic diamine, in Examples, even if 2-ethyl-1,7-heptanediamine and 2-propyl-1,6-hexanediamine are contained, the decrease in the melting point and the glass transition temperature is small, and the heat resistance is excellent.

Therefore, it can be seen that by incorporation of the polyamide (A), the polyamide compositions of Examples have excellent moldability and hydrolysis resistance while maintaining the excellent physical properties of the polyamide (A). Further, the polyamide compositions of Examples exhibit high flame retardancy due to the incorporation of the halogenated flame retardant (B), and also have excellent blister resistance.

Industrial Applicability

As described above, the polyamide composition of the present invention has excellent flame retardancy, moldability, and hydrolysis resistance while maintaining the excellent physical properties of the polyamide (A). Therefore, the polyamide composition of the present invention can be used as various molded articles required to have heat resistance, flame retardancy, and hydrolysis resistance, and can improve productivity in production of molded articles, and is very useful.

The present application is based on a Japanese patent application (Japanese Patent Application No. 2021-206193) filed on December 20, 2021, which is incorporated by reference in its entirety.

**Claims**

1. A polyamide composition comprising a polyamide (A) and a halogenated flame retardant (B), wherein

    the polyamide (A) comprises a diamine unit (X) and a dicarboxylic acid unit (Y),
    the diamine unit (X) comprises 0.1 mol% or more and less than 36 mol% of a diamine unit (X1),
    the diamine unit (X1) is a constituent unit derived from an aliphatic diamine, and the aliphatic diamine has 6 to 10 carbon atoms, the aliphatic diamine having an alkyl group having two or three carbon atoms bonded to a carbon atom at 2-position when a carbon atom to which any one of two amino groups is bonded is taken as 1-position.

2. The polyamide composition according to claim 1, wherein the diamine unit (X1) is a constituent unit derived from an aliphatic diamine having 9 carbon atoms.

3. The polyamide composition according to claim 1 or 2, wherein the diamine unit (X1) is a constituent unit derived from at least one diamine selected from the group consisting of 2-ethyl-1,7-heptanediamine and 2-propyl-1,6-hexanediamine.

4. The polyamide composition according to any one of claims 1 to 3, wherein the diamine unit (X) comprises 1 to 20 mol% of the diamine unit (X1).

5. The polyamide composition according to any one of claims 1 to 4, wherein the diamine unit (X) further comprises a diamine unit (X2) which is a diamine unit other than the diamine unit (X1), and the diamine unit (X2) is a constituent unit derived from at least one diamine selected from the group consisting of a linear aliphatic diamine, a branched aliphatic diamine other than the aliphatic diamine constituting the diamine unit (X1), an alicyclic diamine, and an aromatic diamine.

6. The polyamide composition according to claim 5, wherein the diamine unit (X2) is a constituent unit derived from at least one diamine selected from the group consisting of a linear aliphatic diamine and a branched aliphatic diamine having a methyl group as a branched chain.

7. The polyamide composition according to claim 5 or 6, wherein the diamine unit (X2) is a constituent unit derived from a diamine having 6 to 10 carbon atoms.

8. The polyamide composition according to any one of claims 5 to 7, wherein the diamine unit (X2) is a constituent unit derived from at least one diamine selected from the group consisting of 1,6-hexanediamine, 1,9-nonanediamine, 1,10-decanediamine, 2-methyl-1,5-pentanediamine, and 2-methyl-1,8-octanediamine.

9. The polyamide composition according to any one of claims 1 to 8, wherein the dicarboxylic acid unit (Y) comprises a constituent unit derived from at least one dicarboxylic acid selected from the group consisting of an aliphatic dicarboxylic acid, an aromatic dicarboxylic acid, and an alicyclic dicarboxylic acid.

10. The polyamide composition according to any one of claims 1 to 9, wherein the dicarboxylic acid unit (Y) comprises a constituent unit derived from at least one dicarboxylic acid selected from the group consisting of terephthalic acid, cyclohexanedicarboxylic acid, and naphthalenedicarboxylic acid.

11. The polyamide composition according to any one of claims 1 to 10, wherein the halogenated flame retardant (B) is a brominated flame retardant (B1).

12. The polyamide composition according to claim 11, wherein the brominated flame retardant (B1) is a brominated polystyrene.

13. The polyamide composition according to any one of claims 1 to 12, further comprising a filler (C).

14. The polyamide composition according to claim 13, wherein the filler (C) is contained in an amount of 0.1 parts by mass or more and 200 parts by mass or less with respect to 100 parts by mass of the polyamide (A).

15. The polyamide composition according to any one of claims 1 to 14, further comprising a flame retardant aid (D).

16. The polyamide composition according to claim 15, wherein the flame retardant aid (D) is contained in an amount of 1 part by mass or more and 30 parts by mass or less with respect to 100 parts by mass of the polyamide (A).

17. The polyamide composition according to claim 15 or 16, wherein the flame retardant aid (D) is at least one selected from the group consisting of diantimony trioxide, diantimony tetroxide, diantimony pentoxide, sodium antimonate, melamine orthophosphate, melamine pyrophosphate, melamine borate, melamine polyphosphate, aluminum oxide, aluminum hydroxide, zinc borate, and zinc tin trioxide.

18. A molded article composed of the polyamide composition according to any one of claims 1 to 17.

19. The molded article according to claim 18, which is an electric part or an electronic part.

20. The molded article according to claim 18 or 19, which is a surface-mounted part.

## INTERNATIONAL SEARCH REPORT

International application No.

**PCT/JP2022/046619**

### A. CLASSIFICATION OF SUBJECT MATTER

*C08L 77/06*(2006.01)i; *C08G 69/02*(2006.01)i; *C08L 25/18*(2006.01)i
FI: C08L77/06; C08L25/18; C08G69/02

According to International Patent Classification (IPC) or to both national classification and IPC

### B. FIELDS SEARCHED

Minimum documentation searched (classification system followed by classification symbols)

C08G69/00-69/50; C08L77/06; C08L25/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 52-041692 A (DYNAMIT NOBEL AKTIENGESELLSCHAFT) 31 March 1977 (1977-03-31) claims 1-2, p. 3, upper right column, lines 1-10, p. 3, lower left column, lines 5-8, p. 3, lower right column, lines 11-17, example 2 | 1, 4-20 |
| A | | 2-3 |
| Y | JP 03-140327 A (HUELS AKTIENGESELLSCHAFT) 14 June 1991 (1991-06-14) claim 1, p. 3, lower left column, lines 13-20, p. 3, lower right column, line 13 to p. 4, upper left column, line 17, example 1 | 1, 4-7, 9-20 |
| A | | 2-3, 8 |
| Y | WO 93/00386 A1 (E. I. DU PONT DE NEMOURS AND CO.) 07 January 1993 (1993-01-07) claims 1, 4, p. 5, lines 4-11, p. 6, lines 1-36, table I(a), example 1 | 1, 4-9, 11-20 |
| A | | 2-3, 10 |
| Y | WO 2020/040282 A1 (KURARAY CO., LTD.) 27 February 2020 (2020-02-27) claims 1, 22, 24-30, 37, 39-40, paragraphs [0006]-[0008], [0010] | 1, 4-20 |
| A | | 2-3 |

☑ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **17 February 2023** | **28 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

| International application No. |
| --- |
| **PCT/JP2022/046619** |

**C.      DOCUMENTS CONSIDERED TO BE RELEVANT**

| Category* | Citation of document, with indication, where appropriate, of the relevant passages | Relevant to claim No. |
| --- | --- | --- |
| A | JP 2011-080046 A (ASAHI KASEI CHEMICALS CORP.) 21 April 2011 (2011-04-21)<br>    entire text | 1–20 |

## INTERNATIONAL SEARCH REPORT
### Information on patent family members

International application No.

**PCT/JP2022/046619**

| Patent document cited in search report | | | Publication date (day/month/year) | Patent family member(s) | | | Publication date (day/month/year) |
|---|---|---|---|---|---|---|---|
| JP | 52-041692 | A | 31 March 1977 | US | 4111921 | A | |
| | | | | claims 1, 4, p. 2, column 3, lines 58-68, p. 2, column 4, lines 21-24, p. 2, column 4, lines 55-63, example 2 | | | |
| | | | | GB | 1557272 | A | |
| | | | | DE | 2542938 | A1 | |
| | | | | FR | 2325673 | A1 | |
| | | | | BE | 846558 | A | |
| | | | | CA | 1063293 | A | |
| | | | | IT | 1066261 | B | |
| JP | 03-140327 | A | 14 June 1991 | US | 5300557 | A | |
| | | | | claim 1, p. 1, column 2, line 62 to p. 2, column 3, line 7, p. 2, column 3, lines 41-66, example 1 | | | |
| | | | | EP | 423472 | A2 | |
| | | | | DE | 3934926 | A | |
| | | | | CA | 2027965 | A1 | |
| WO | 93/00386 | A1 | 07 January 1993 | US | 5110900 | A | |
| | | | | EP | 593577 | B1 | |
| | | | | BR | 9206173 | A | |
| | | | | CA | 2111247 | A1 | |
| WO | 2020/040282 | A1 | 27 February 2020 | US | 2021/0179778 | A1 | |
| | | | | claims 1, 22, 24-30, 37, 39-40, paragraphs [0013]-[0016], [0020] | | | |
| | | | | EP | 3842471 | A1 | |
| | | | | CN | 112601776 | A | |
| | | | | KR | 10-2021-0048486 | A | |
| | | | | BR | 112021001692 | A | |
| | | | | TW | 202017968 | A | |
| JP | 2011-080046 | A | 21 April 2011 | (Family: none) | | | |

Form PCT/ISA/210 (patent family annex) (January 2015)

**EP 4 455 217 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011080055 A
- JP 2017517594 A
- JP 2021206193 A